# FASCICULE DE BREVET EUROPEEN

(11) **EP 3 922 551 B1**
(45) Date de publication et mention de la délivrance du brevet: **07.06.2023**
(21) Numéro de dépôt: 21170157.8
(22) Date de dépôt: 23.04.2021
(51) Int. Cl.: B64C 39/00, B64D 1/00

(54) **DISPOSITIF DE CAPTURE D'UN ENGIN VOLANT ET SYSTÈME DE CAPTURE COMPRENANT UN DRONE ÉQUIPÉ D'UN TEL DISPOSITIF DE CAPTURE**
VORRICHTUNG ZUM EINFANGEN EINES FLUGGERÄTS UND EINFANGSYSTEM MIT EINER DROHNE, DIE MIT EINER SOLCHEN VORRICHTUNG AUSGESTATTET IST
DEVICE FOR CAPTURING AN AIRCRAFT AND CAPTURE SYSTEM COMPRISING A DRONE PROVIDED WITH SUCH A CAPTURE DEVICE

(30) Priorité: 09.06.2020 FR 2005984
(43) Date de publication de la demande: 15.12.2021
(73) Titulaire: MBDA France, 92350 Le Plessis-Robinson (FR)
(72) Inventeur: LEROUGE, Aléxis, 92350 Le Plessis-Robinson (FR)
(74) Mandataire: Gevers & Orès

(56) Documents cités:
- DE-A1-102015 003 323
- US-A1- 2018 224 262
- US-B1- 9 085 362
- US-B1- 10 458 757

## Description

### DOMAINE TECHNIQUE

La présente invention concerne un dispositif de capture d'un engin volant ainsi qu'un système de capture comprenant un drone équipé d'un tel dispositif de capture.

### ETAT DE LA TECHNIQUE

La présente invention peut être utilisée à l'encontre de tout type d'engin volant, notamment un drone, que l'on souhaite capturer.

Bien que non exclusivement, il peut s'agir plus particulièrement d'un engin volant présentant une menace Un tel engin volant hostile est susceptible notamment d'être équipé d'une arme telle qu'un explosif, ou une substance chimique, biologique ou radiologique. Il peut également s'agir d'un engin volant hostile équipé d'un dispositif de perturbation électronique ou destiné à réaliser une surveillance d'un site protégé.

La destruction d'un tel engin volant pouvant être dangereuse, en particulier en raison d'un risque de dispersion de produits qu'il a embarqués ou de sa chute au sol, sa capture est généralement privilégiée en vue de sa neutralisation.

On connaît de nombreux systèmes destinés à capturer un tel engin volant.

Par le document US-10 458 757, on connaît un procédé de capture d'un engin volant à l'aide d'un système de capture, le procédé de capture comprenant une étape de déploiement et une étape de capture.

En outre, par le document US-9 896 221, on connaît un drone pourvu d'un dispositif de capture permettant de capturer des drones hostiles. Ce dispositif de capture comprend un filet déployable destiné à attraper le drone hostile. Un autre exemple est donné par le document DE102015003323.

Dans un mode de réalisation particulier, le dispositif de capture est muni d'un cadre fermé, qui est gonflable afin d'être rendu rigide. Lorsqu'il est gonflé, le cadre fermé présente une forme circulaire. Ce cadre sert à retenir le filet. Toutefois, pour pouvoir être maintenu dans une position stable par rapport au drone, le cadre est fixé au drone.

Une telle structure fixe génère des perturbations aérodynamiques et peut perturber le vol du drone, rendant difficile la capture d'un drone hostile.

Dans un autre mode de réalisation, le dispositif de capture comprend un parachute qui est remorqué par le drone. Toutefois, le parachute tombe sous le drone et son positionnement par rapport au drone n'est pas du tout maîtrisé. Il est notamment très sensible aux perturbations météorologiques et en particulier aux vents, ce qui rend difficile la capture d'un drone hostile à l'aide d'un tel dispositif de capture.

Aucune de ces solutions usuelles n'est donc satisfaisante.

### EXPOSÉ DE L'INVENTION

La présente invention a pour objet de remédier à cet inconvénient. Elle concerne un dispositif de capture d'un engin volant, ledit dispositif de capture comportant un filet.

Selon l'invention, ledit dispositif de capture comporte, de plus :
- au moins une tige configurée pour former une ligne fermée, de préférence circulaire, la tige définissant une face d'attaque et une face de fuite, le filet présentant un diamètre maximal qui est supérieur à un diamètre maximal de la ligne fermée formée par la tige et étant attaché à la tige du côté de la face de fuite ;
- un bandeau attaché tout autour de la tige à l'extérieur du filet du côté de la face de fuite ; et
- des fils de maintien attachés à la tige du côté de la face d'attaque.

Ainsi, l'ensemble formé de la tige et du bandeau permet de maintenir le filet (et plus généralement tout le dispositif de capture) dans une position optimale pour capturer un engin volant. En effet, la tige qui présente une certaine rigidité permet de conserver sa ligne fermée, de préférence circulaire, ce qui permet de faciliter l'entrée de l'engin volant dans le filet à travers la tige, et surtout le bandeau permet de maintenir en sustentation le dispositif de capture, ce qui permet de faciliter l'approche de l'engin volant en vue de sa capture.

De préférence, la tige présente donc, comme ligne fermée, une forme circulaire. Toutefois, d'autres formes géométriques sont bien entendu également possibles dans le cadre de la présente invention.

Avantageusement, le dispositif de capture est configuré pour pouvoir prendre une position repliée dans laquelle la tige est pliée ainsi que le filet, le bandeau et les fils de maintien, et une position déployée (stable) dans laquelle la tige est dépliée et prend sa forme de ligne fermée.

En outre, de façon avantageuse, les fils de maintien se rejoignent à un point de jonction auquel est attaché un fil de remorquage. Dans un mode de réalisation particulier, les fils de maintien et/ou le fil de remorquage sont élastiques.

Par ailleurs, de façon avantageuse, la tige présente au moins l'une des caractéristiques suivantes :
- elle est réalisée en fibre de carbone ;
- elle présente un diamètre compris entre deux et quatre millimètres ;
- la ligne fermée, par exemple circulaire, formée par la tige, présente un diamètre compris entre deux et quatre mètres.

En outre, avantageusement, le bandeau présente au moins l'une des caractéristiques suivantes :
- il est réalisée en polyamide ou en polyester ;
- il présente une largeur comprise entre cinq et dix centimètres.

La présente invention concerne également un système de capture. Selon l'invention, ledit système de capture comporte un dispositif de capture tel que celui décrit ci-dessus et un drone muni de ce dispositif de capture, le dispositif de capture étant remorqué par le drone au moins lors d'une étape de capture.

Dans un mode de réalisation particulier, le système de capture comporte un sac dans lequel est intégré le dispositif de capture dans une position repliée et ledit sac est fixé sur la structure externe du drone dans une partie inférieure du drone.

Avantageusement, le système de capture comporte des moyens d'ouverture aptes à être commandés et configurés pour pouvoir ouvrir le sac de manière à permettre la sortie du dispositif de capture via le dépliage de la tige. Dans un mode de réalisation particulier, les moyens d'ouverture comportent un organe d'actionnement apte à être commandé et configuré pour enlever une broche permettant de maintenir ensemble plusieurs parties du sac et ainsi libérer les parties maintenues ensemble.

Par ailleurs, de façon avantageuse, le système de capture comporte également un moyen de séparation apte à être commandé et configuré pour pouvoir séparer le dispositif de capture du drone.

La présente invention concerne, de plus, un procédé de capture d'un engin volant à l'aide d'un système de capture tel que celui décrit ci-dessus.

Selon l'invention, ledit procédé de capture comporte au moins les étapes suivantes :
- une étape de déploiement consistant à déployer le dispositif de capture, à partir d'une position repliée, le dispositif de capture restant attaché au drone dans sa position déployée et étant remorqué par ce dernier ; et
- une étape de capture consistant à faire voler le drone de manière à amener le dispositif de capture qu'il remorque, dans une position telle que l'engin volant à capturer traverse la tige dudit dispositif de capture par sa face d'attaque et soit retenu dans le filet dudit dispositif de capture.

Avantageusement, le procédé de capture comporte, de plus, une étape de largage consistant à libérer le dispositif de capture du drone pour larguer l'engin volant capturé dans ledit dispositif de capture.

En outre, dans un mode de réalisation préféré, le procédé de capture comporte, de plus, entre l'étape de capture et l'étape de largage, une étape d'éloignement consistant à faire voler le drone de manière amener l'engin volant capturé dans le dispositif de capture au-dessus d'une zone géographique donnée, généralement une zone sure, où est mise en oeuvre l'étape de largage.

### BRÈVE DESCRIPTION DES FIGURES

La figure 1 montre schématiquement un mode de réalisation particulier d'un système de capture, pendant une phase (ou étape) de capture d'un engin volant.
La figure 2 est une vue schématique, en plan, d'un dispositif de capture.
La figure 3 illustre schématiquement un sac montré en transparence, qui est pourvu d'un dispositif de capture.
La figure 4 montre schématiquement un drone pourvu d'un dispositif de capture agencé dans un sac fixé sous le drone.
Les figures 5A, 5B et 5C illustrent différentes étapes successives du pliage d'un dispositif de capture.
Les figures 6A et 6B illustrent deux étapes de mise en place d'un dispositif de capture dans un sac.
La figure 7 est le schéma synoptique d'un procédé de capture mis en oeuvre par un système de capture.
Les figures 8A, 8B, 8C et 8D illustrent différentes étapes successives du déploiement d'un dispositif de capture lors d'un vol du drone.
La figure 9 montre une étape de capture d'un engin volant par un système de capture identique à celui de la figure 1.
La figure 10 illustre schématiquement une étape de largage d'un engin volant capturé par un dispositif de capture.

### DESCRIPTION DÉTAILLÉE

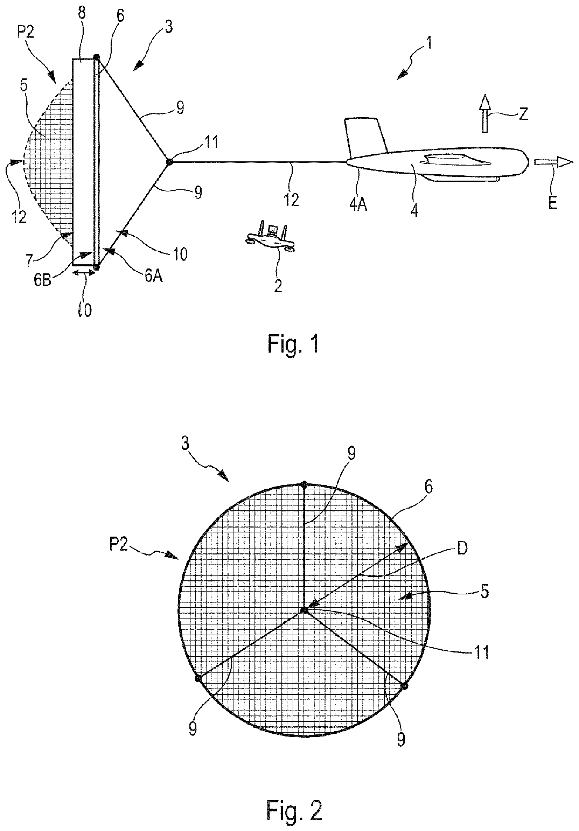

Le système de capture 1, permettant d'illustrer l'invention et représenté schématiquement sur la figure 1 dans un mode de réalisation particulier, est destiné à capturer un engin volant 2, en particulier un engin volant hostile.

L'engin volant 2 peut correspondre notamment à un engin volant, par exemple un drone, présentant une menace, et susceptible notamment d'être équipé d'une arme telle qu'un explosif, ou une substance chimique, biologique ou radiologique. Il peut également s'agir d'un engin volant hostile équipé d'un dispositif de perturbation électronique ou destiné à réaliser une surveillance d'un site protégé.

Pour ce faire, le système de capture 1 comporte un dispositif de capture 3 et un drone 4 qui est équipé ce dispositif de capture 3. Le dispositif de capture 3 est remorqué par le drone 4 dans une étape (ou phase) de capture représentée sur la figure 1, le drone 4 volant dans le sens illustré par une flèche E.

Dans la suite de la description, le terme « avant » est défini dans le sens de la flèche E et le terme « arrière » est défini dans le sens opposé à celui de la flèche E. De plus, les termes « inférieur » et « bas » sont définis dans le sens opposé à celui d'une flèche Z verticale (figure 1) orientée de la Terre vers le ciel.

Le drone 4 comprend tous les moyens usuels (moteur, surfaces portantes, ...) permettant audit drone 4 de voler et de réaliser les manoeuvres permettant de capturer l'engin volant 2. Le drone 4 peut être téléguidé ou être complètement autonome en vol, et il comprend des moyens usuels pour mettre en oeuvre ces fonctions. Tous ces moyens usuels embarqués sur le drone 4 sont connus et ne sont pas décrits davantage dans la présente description.

Le dispositif de capture 3, quant à lui, comporte, comme représenté sur les figures 1 et 2 :
- un filet 5 déployable ;
- une tige 6 configurée pour former une ligne fermée. La tige 6 définit une face d'attaque 6A et une face de fuite 6B. Le filet 5 présente un diamètre maximal qui est supérieur à un diamètre maximal de la tige 6 et est attaché à la tige 6 du côté 7 de la face de fuite 6B ;
- un bandeau 8 attaché tout autour de la tige 6 à l'extérieur du filet 5, du côté 7 de la face de fuite 6B ; et
- des fils de maintien 9 attachés à la tige 5 du côté 10 de la face d'attaque 6A.

Dans le mode de réalisation préféré, représenté sur les figures 1 et 2, la tige 6 présente, comme ligne fermée, une forme circulaire. Toutefois, d'autres formes géométriques, notamment d'autres formes courbes (elliptique, ovale, quelconque) ou des formes de parallélogramme, sont bien entendu possibles dans le cadre de la présente invention.

La tige 6 est rigide. Cette rigidité permet de conserver la forme fermée, notamment circulaire, destinée à permettre l'entrée de l'engin volant 2 dans le dispositif de capture 3 à travers ladite tige 6.

La tige 6 peut être formée d'une pièce unique ou d'une pluralité de tronçons de tige liés ensemble pour former ladite tige 6. Le diamètre D (figure 2) de la ligne fermée (ou arceau) formée par la tige 6 est optimisé. Il est suffisamment important pour permettre à un engin volant 2 de pénétrer dans le dispositif de capture 3, à travers ladite tige 6, mais il n'est pas trop important pour éviter une instabilité de structure et pour permettre de plier la tige 6 en particulier pour pouvoir l'insérer dans un sac comme précisé ci-dessous. Pour ce faire, dans un mode de réalisation particulier, la tige 6 présente un diamètre D compris entre deux et quatre mètres.

En outre, la tige 6 est réalisée en un matériau suffisamment flexible de manière à pouvoir être pliée, tout en étant suffisamment rigide pour conserver la forme fermée destinée à permettre l'entrée de l'engin volant 2 dans le dispositif de capture 3. Pour ce faire, dans un mode de réalisation particulier, la tige 6 est réalisée en fibre de carbone, et/ou elle présente deux à quatre millimètres d'épaisseur.

Comme indiqué ci-dessus, le filet 5 présente un diamètre maximal qui est supérieur à un diamètre maximal de la tige 6 lorsqu'elle est dépliée.

On entend par « diamètre maximal » d'un élément, la distance maximale entre deux points extrêmes de l'élément, quelle que soit la forme de l'élément. Bien entendu, dans le cadre d'un élément circulaire, comme dans l'exemple de la tige 6 représentée sur la figure 2, ce diamètre maximal correspond simplement au diamètre D du cercle correspondant.

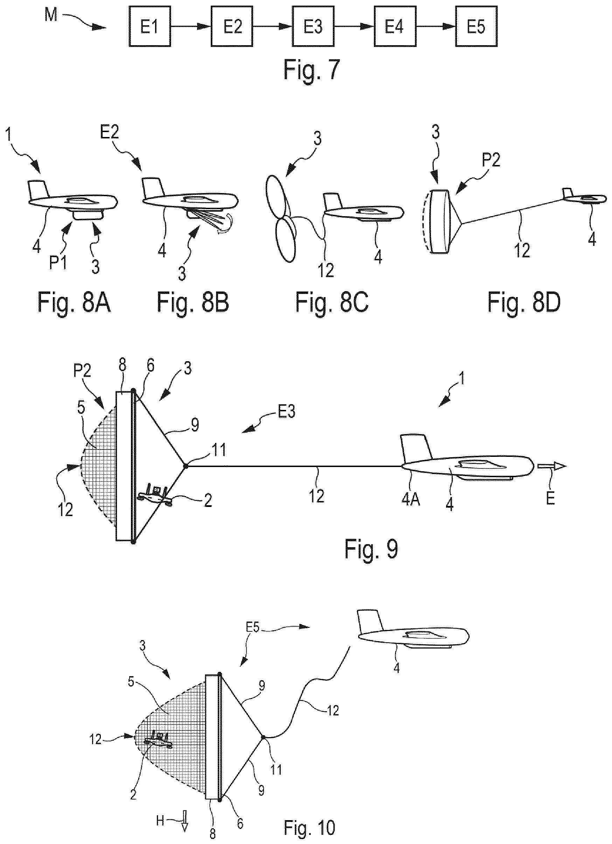

Le diamètre du filet 5 est supérieur au diamètre D de la tige 6 pour permettre au filet 5 de flotter derrière la tige 6 (du côté 7 du bord de fuite 6B) lors du voldu drone 4 comme représenté sur la figure 1, et pour pouvoir recevoir l'engin volant 2 (lorsqu'il est capturé) entre la tige 6 et le bord arrière 12 du filet 5 comme représenté sur la figure 10.

Le filet 5 peut être réalisé en tout type de matériau usuel et il présente des mailles aptes à retenir l'engin volant 2. Ces mailles peuvent prendre différentes formes, par exemple carrées, rectangulaires, ...

Par ailleurs, le bandeau 8 est destiné à permettre au dispositif de capture 3 de présenter une certaine sustentation et de le maintenir en l'air lorsqu'il est remorqué par le drone 4, et ceci quelle que soit la vitesse de vol de ce dernier, même à une vitesse faible.

Pour ce faire, dans un mode de réalisation particulier, le bandeau 8 est réalisé en un matériau usuel utilisé pour fabriquer une voile de parachute, par exemple en polyamide ou en polyester.

De plus, le bandeau 8 présente une largeur I0 (figure 1) optimisée. Cette largeur I0 est, d'une part, suffisamment importante pour générer la sustentation nécessaire au maintien du dispositif de capture 3 en l'air et, d'autre part, suffisamment réduite pour éviter l'apparition d'instabilités et de perturbations aérodynamiques susceptibles notamment de générer une traînée importante pouvant perturber le vol du drone 4. Dans un mode de réalisation préféré, le bandeau 8 présente une largeur I0 comprise entre cinq et dix centimètres.

Par ailleurs, le dispositif de capture 3 comporte un certain nombre de fils de maintien 9, par exemple trois ou six de fils de maintien 9, qui sont uniformément réparties autour de la périphérie de la tige 6, notamment pour obtenir une répartition uniforme de forces de traction.

En outre, les fils de maintien 9 se rejoignent à un point de jonction 11 auquel est attaché un fil de remorquage 12. Ce fil de remorquage 12 est lié au drone 4 de sorte que le drone 4 remorque le dispositif de capture 3, comme montré sur la figure 1.

Le fil de remorquage 12 peut être fixé à l'arrière du drone 4, comme représenté sur la figure 1, ou sur une autre partie du fuselage 4A du drone 4, située vers l'arrière et de préférence vers le bas.

Dans un mode de réalisation particulier, les fils de maintien 9 et/ou le fil de remorquage 12 sont réalisés dans un matériau élastique. Cette élasticité des fils de maintien 9 et/ou du fil de remorquage 12 permet d'amortir le choc généré lors du déploiement du dispositif de capture 3 tel que décrit ci-dessous, ainsi que le choc généré au moment de la capture de l'engin volant 2 dans le filet 5.

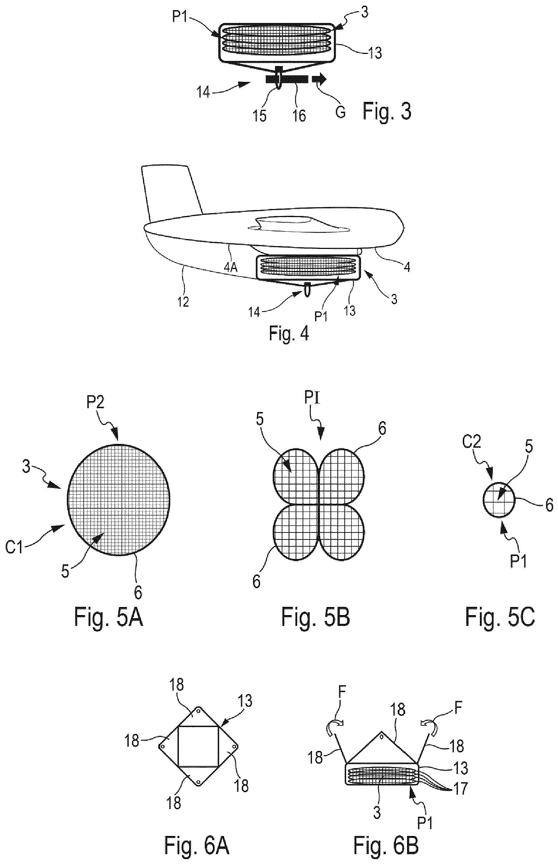

Le dispositif de capture 3, tel que décrit ci-dessus, est configuré pour pouvoir prendre deux positions successives différentes :
- une position repliée P1 dans laquelle la tige 6 est pliée (sous contrainte mécanique), ainsi que le filet 5, le bandeau 8 et les fils de maintien 9, comme représenté sur les figures 3 et 4 ; et
- une position déployée P2 stable dans laquelle la tige 6 est dépliée et prend sa forme de ligne fermée, comme représenté sur les figures 1 et 2.

Dans un mode de réalisation particulier, le système de capture 1 comporte un sac 13 dans lequel est intégré le dispositif de capture 3 dans la position repliée P1 comme représenté sur la figure 3.

Le sac 13 est fixé sur la structure externe (fuselage 4A) du drone 4 dans une partie inférieure du drone 4, comme montré notamment sur la figure 4. De préférence, le sac 13 est fixé sous le ventre du drone 4. Cette mise en place dans le sac 13 permet de réduire la traînée générée par le dispositif de capture 3 et permet ainsi au drone 4 de conserver toute sa manoeuvrabilité.

Les figures 5A à 5C illustrent un exemple de pliage de la tige 6 pour permettre d'amener le dispositif de capture 3 de la position déployée P2 représentée sur la figure 5A, à la position repliée P1 représentée sur la figure 5C. Pour ce faire, dans cet exemple, la tige 6 est tout d'abord pliée de la position déployée P2 (figure 5A) dans une position intermédiaire PI (figure 5B) à quatre cercles. Puis, elle est pliée de la position intermédiaire PI dans la position repliée P1 (figure 5C).

Dans la position déployée P2, la tige 6 présente un cercle C1. L'exemple de pliage représenté sur les figures 5A à 5C permet de passer à un cercle C2 avec quatre parties 17 superposées, comme représenté sur les figures 3 et 6B, qui est suffisamment réduit pour permettre de placer le dispositif de capture dans le sac 13. Dans cette position repliée P1, le pliage de la tige 6 est tel, en lien avec le matériau utilisé qui présente une certaine élasticité, qu'il génère une tension mécanique tendant à déplier la tige 6 pour qu'elle retrouve sa position dépliée stable de la figure 2.

Bien entendu, d'autres types de pliage sont envisageables dans le cadre de la présente invention (avec un nombre différent de parties superposées), en fonction notamment du diamètre de la tige 6.

Lorsqu'il est replié, le dispositif de capture 3 est monté dans le sac 13. La figure 6A montre un exemple de sac 13 susceptible de recevoir le dispositif de capture 3 dans sa position repliée P1. Lorsque le dispositif de capture 3 est en place dans le sac 13, les bords 18 du sac 13 sont rabattus comme illustré par des flèches F sur la figure 6B, et sont maintenus par des moyens de fermeture (non représentés).

Le système de capture 1 comporte également des moyens d'ouverture (non représentés) aptes à être commandés et configurés pour pouvoir ouvrir le sac 13 de manière à permettre la sortie du dispositif de capture 3 via le dépliage de la tige 6.

Dans un mode de réalisation particulier, représenté sur la figure 3, le sac 13 est pourvu de moyens de fermeture 14 comportant une broche 16 permettant de maintenir ensemble plusieurs parties 18 du sac 13 via un anneau 15. Dans ce mode de réalisation particulier les moyens d'ouverture comportent un organe d'actionnement (non représenté) apte à être commandé. Cet organe d'actionnement est configuré pour enlever la broche 16 comme illustré par une flèche G sur la figure 3, et ainsi libérer les parties maintenues ensemble pour permettre l'ouverture du sac 13.

La tension mécanique de la tige 6, due au pliage de la tige 6, permet alors l'ouverture complète du sac 13.

Par ailleurs, le système de capture 1 comporte également un moyen de séparation (non représenté) apte à être commandé et configuré pour pouvoir séparer le dispositif de capture 3 du drone 4, en enlevant l'attache du fil de remorquage 12 du drone 4.

Les moyens d'ouverture et le moyen de séparation peuvent être commandés par l'intermédiaire d'un signal de commande envoyé à distance par un opérateur, ou un signal de commande généré automatiquement notamment en fonction de la position du drone 4.

Le système de capture 1, tel que décrit ci-dessus, est configuré pour pouvoir mettre en oeuvre un procédé de capture M d'un engin volant 2.

Dans un mode de réalisation préféré, ce procédé de capture M comporte les étapes E1 à E5 représentées sur la figure 7.

Dans un mode de mise en oeuvre particulier, lorsqu'une menace générée par un engin volant 2 est détectée, le drone 4 muni du dispositif de capture 3 est lancé, par exemple à partir d'une plateforme de lancement. Le drone 4 vole, par exemple de façon autonome ou en étant téléguidé, vers l'engin volant 2 lors d'une étape initiale d'approche E1. Lorsqu'il arrive à proximité de l'engin volant 2, par exemple à 15 mètres de l'engin volant 2, le dispositif de capture 3 qui est installé dans le sac 13 est déployé au cours d'une étape de déploiement E2.

L'étape de déploiement E2 consiste à déployer le dispositif de capture 3, à partir de la position repliée P1.

Les figures 8A à 8D montrent différents instants successifs de l'étape de déploiement E2. Sur la figure 8A, le dispositif de capture 3 est installé dans le sac 13 qui est fixé sous le drone 4 et fermé. La figure 8B montre l'ouverture du sac 13 (à l'aide des moyens d'ouverture qui sont commandés) et la sortie progressive du dispositif de capture 3 du sac 13, vers le bas, sous l'action mécanique de la tige 6 qui tend à se déplier. Le dispositif de capture 3 est déployé progressivement (figure 8C) pour arriver à la position déployée P2 de la figure 8D. Il reste attaché au drone 4 par l'intermédiaire du fil de remorquage 12. De plus, le dispositif de capture 3 est maintenu en l'air derrière le drone 4, à l'aide du bandeau 8 et du déplacement vers l'avant du drone 4.

A l'issue de cette étape de déploiement E2, le dispositif de capture 3 reste donc attaché au drone 4 par l'intermédiaire du fil de remorquage 12 et est remorqué par le drone 4.

Une manoeuvre de vol est alors réalisée par le drone 4 pour mettre en oeuvre une étape de capture E3 suivante.

L'étape de capture E3 consiste à attraper l'engin volant 2 dans le filet 5 du dispositif de capture 3. Pour ce faire, on fait voler le drone 4 de manière à amener le dispositif de capture 3 qu'il remorque, dans une position telle que l'engin volant 2 à capturer traverse la tige 6 dudit dispositif de capture 3 par sa face d'attaque 6A, comme il est en train de le faire sur l'exemple de la figure 9, et qu'il soit retenu dans le filet 5 du dispositif de capture 3, dans la partie arrière 12 du filet 5. Après avoir été ainsi capturé, le drone 2 reste emprisonné dans le filet 5.

En outre, dans un mode de réalisation préféré, le procédé de capture M comporte, de plus, une étape d'éloignement E4 mise en oeuvre après l'étape de capture E3. Cette étape d'éloignement E4 consiste à faire voler le drone 4 de manière à éloigner l'engin volant 2 de la zone géographique survolée et amener l'engin volant 2 capturé dans le dispositif de capture 3 au-dessus d'une zone géographique donnée. Lorsqu'il arrive au-dessus de cette zone géographique donnée, une étape de largage E5 est mise en oeuvre.

La zone géographique qui est survolée au moment de la capture peut être une zone sensible, par exemple une zone où se trouvent des personnes, qu'il convient d'éviter. Quant à la zone géographique donnée, elle correspond de préférence à une zone géographique sûre où il n'existe pas de risque de dommages collatéraux.

L'étape de largage E5 consiste à libérer le dispositif de capture 3 du drone 4, à l'aide du moyen de séparation qui est commandé pour détacher le fil de remorquage 12 du drone 4 comme représenté sur la figure 10. Cette séparation de l'ensemble formé de l'engin volant 2 et du dispositif de capture 3 permet de larguer l'engin volant 2 capturé dans le dispositif de capture 3. L'engin volant 2 ainsi capturé ne peut plus voler et tombe sur le sol comme illustré par une flèche H sur la figure 10, où il peut être récupéré ou détruit s'il ne l'est pas encore.

Le drone 4 peut, quant à lui, continuer à voler et se déplacer dans une zone sûre.

Bien entendu, l'étape de largage E5 peut également être mise en oeuvre directement après l'étape de capture E3, par exemple si le drone 4 se trouve au-dessus d'une zone sûre lors de la capture.

## Revendications

1. Dispositif de capture d'un engin volant, ledit dispositif de capture (3) comportant un filet (5), et
au moins une tige (6) configurée pour former une ligne fermée, la tige (6) définissant une face d'attaque (6A) et une face de fuite (6B), le filet (5) présentant un diamètre maximal qui est supérieur à un diamètre maximal (D) de ligne fermée formée par la tige (6), le filet (5) étant attaché à la tige (6) du côté (7) de la face de fuite (6B),
**caractérisé en ce que** le dispositif comprend en autre:
- un bandeau (8) attaché tout autour de la tige (6) à l'extérieur du filet (5) du côté (7) de la face de fuite (6B) ; et
- des fils de maintien (9) attachés à la tige (6) du côté (10) de la face d'attaque (6A).

2. Dispositif selon la revendication 1,
**caractérisé en ce que** la tige (6) présente, comme ligne fermée, une forme circulaire.

3. Dispositif selon l'une des revendications 1 et 2,
**caractérisé en ce qu'**il est configuré pour pouvoir prendre une position repliée dans laquelle la tige (6) est pliée ainsi que le filet (5), le bandeau (8), et les fils de maintien (9) et une position déployée (P2) dans laquelle la tige (6) est dépliée et prend sa forme de ligne fermée.

4. Dispositif selon l'une quelconque des revendications précédentes, **caractérisé en ce que** les fils de maintien (9) se rejoignent à un point de jonction (11) auquel est attaché un fil de remorquage (12).

5. Dispositif selon la revendication 4,
**caractérisé en ce que** les fils de maintien (9) et/ou le fil de remorquage (12) sont élastiques.

6. Dispositif selon l'une quelconque des revendications précédentes, **caractérisé en ce que** la tige (6) présente au moins l'une des caractéristiques suivantes :
- elle est réalisée en fibre de carbone ;
- elle présente un diamètre compris entre deux et quatre millimètres ;
- la ligne fermée formée par la tige(6) présente un diamètre (D) compris entre deux et quatre mètres.

7. Dispositif selon l'une quelconque des revendications précédentes, **caractérisé en ce que** le bandeau (8) présente au moins l'une des caractéristiques suivantes :
- il est réalisé en polyamide ou en polyester ;
- il présente une largeur (10) comprise entre cinq et dix centimètres.

8. Système de capture d'un engin volant,
**caractérisé en ce qu'**il comporte un dispositif de capture (3) tel que celui spécifié sous l'une quelconque des revendications 1 à 7 et un drone (4) muni de ce dispositif de capture (3), le dispositif de capture (3) étant remorqué par le drone (4) lors d'une étape de capture (E3).

9. Système selon la revendication 8,
**caractérisé en ce qu'**il comporte un sac (13) dans lequel est intégré le dispositif de capture (3) dans une position repliée (P1), et **en ce que** ledit sac (13) est fixé sur la structure externe (4A) du drone (4) dans une partie inférieure du drone (4).

10. Système selon la revendication 9,
**caractérisé en ce qu'**il comporte des moyens d'ouverture aptes à être commandés et configurés pour pouvoir ouvrir le sac (13) de manière à permettre la sortie du dispositif de capture (3) via le dépliage de la tige (6).

11. Système selon la revendication 10,
**caractérisé en ce que** les moyens d'ouverture comporte un organe d'actionnement apte à être commandé et configuré pour enlever une broche (16) permettant de maintenir ensemble plusieurs parties (18) du sac (13) et ainsi libérer les parties (18) maintenues ensemble.

12. Système selon l'une quelconque des revendications 8 à 11,
**caractérisé en ce qu'**il comporte un moyen de séparation apte à être commandé et configuré pour pouvoir séparer le dispositif de capture (3) du drone (4).

13. Procédé de capture d'un engin volant à l'aide d'un système de capture, le système de capture (1) comportant un dispositif de capture (3) et un drone (4) muni de ce dispositif de capture (3), le dispositif de capture (3) comportant un filet (5), au moins une tige (6) configurée pour former une ligne fermée, la tige (6) définissant une face d'attaque (6A) et une face de fuite (6B), le filet (5) présentant un diamètre maximal qui est supérieur à un diamètre maximal (D) de ligne fermée formée par la tige (6), le filet (5) étant attaché à la tige (6) du côté (7) de la face de fuite (6B), un bandeau (8) attaché tout autour de la tige (6) à l'extérieur du filet (5) du côté (7) de la face de fuite (6B), et des fils de maintien (9) attachés à la tige (6) du côté (10) de la face d'attaque (6A), **caractérisé en ce qu'**il comporte au moins les étapes suivantes :
- une étape de déploiement (E2) consistant à déployer le dispositif de capture (3) à partir d'une position repliée (P1) dans laquelle la tige (6) est pliée ainsi que le filet (5), le bandeau (8) et les fils de maintien (9), dans une position déployée (P2) dans laquelle la tige (6) est dépliée et prend sa forme de ligne fermée, le dispositif de capture (3) restant attaché au drone (4) et étant remorqué par ce dernier ; et
- une étape de capture (E3) consistant à faire voler le drone (4) de manière à amener le dispositif de capture (3) qu'il remorque, dans une position telle que l'engin volant (2) à capturer traverse la tige (6) dudit dispositif de capture (3) par sa face d'attaque (6A) et soit retenu dans le filet (5) dudit dispositif de capture (3).

14. Procédé selon la revendication 13,
**caractérisé en ce qu'**il comporte, de plus, une étape de largage (E5) consistant à libérer le dispositif de capture (3) du drone (4) pour larguer l'engin volant (2) capturé dans ledit dispositif de capture (3).

15. Procédé selon la revendication 14,
**caractérisé en ce qu'**il comporte, de plus, entre l'étape de capture (E3) et l'étape de largage (E5), une étape d'éloignement (E4) consistant à faire voler le drone (4) de manière amener l'engin volant (2) capturé dans le dispositif de capture (3), au-dessus d'une zone géographique donnée où est mise en oeuvre l'étape de largage (E5).

## Patentansprüche

1. Vorrichtung zum Einfangen eines Fluggeräts, wobei die Einfangvorrichtung (3) ein Netz (5) umfasst, und
mindestens einen Schaft (6), der dazu ausgelegt ist, eine geschlossene Linie zu bilden, wobei der Schaft (6) eine Anströmseite (6A) und eine Abströmseite (6B) definiert, wobei das Netz (5) einen maximalen Durchmesser aufweist, der größer ist als ein maximaler Durchschnitt (D) der geschlossenen Linie, die von dem Schaft (6) gebildet wird, wobei das Netz (5) am Schaft (6) auf der Seite (7) der Abströmseite (6B) befestigt ist,
**dadurch gekennzeichnet, dass** die Vorrichtung weiter umfasst:
- eine Blende (8), die vollständig um den Schaft (6) herum auf der Außenseite des Netzes (5) auf der Seite (7) der Abströmseite (6B) befestigt ist; und
- Halteseile (9), die am Schaft (6) auf der Seite (10) der Anströmseite (6A) befestigt sind.

2. Vorrichtung nach Anspruch 1,
**dadurch gekennzeichnet, dass** der Schaft (6), als geschlossene Linie, eine kreisförmige Form aufweist.

3. Vorrichtung nach einem der Ansprüche 1 und 2,
**dadurch gekennzeichnet, dass** sie dazu ausgelegt ist, eine zusammengeklappte Position einnehmen zu können, in der der Schaft (6) sowie das Netz (5), die Blende (8) und die Halteseile (9) zusammengeklappt sind, und eine ausgebreitete Position (P2), in der der Schaft (6) auseinandergeklappt ist und seine Form einer geschlossenen Linie einnimmt.

4. Vorrichtung nach einem der vorstehenden Ansprüche,
**dadurch gekennzeichnet, dass** die Halteseile (9) an einem Verbindungspunkt (11), an dem ein Schleppseil (12) befestigt ist, zusammenkommen.

5. Vorrichtung nach Anspruch 4,
**dadurch gekennzeichnet, dass** die Halteseile (9) und/oder das Schleppseil (12) elastisch sind.

6. Vorrichtung nach einem der vorstehenden Ansprüche,
**dadurch gekennzeichnet, dass** der Schaft (6) mindestens eines der folgenden Merkmale aufweist:
- er ist aus Kohlefaser hergestellt;
- er weist einen Durchmesser zwischen zwei und vier Millimetern auf;
- die durch den Schaft (6) gebildete geschlossene Linie weist einen Durchmesser (D) zwischen zwei und vier Metern auf.

7. Vorrichtung nach einem der vorstehenden Ansprüche,
**dadurch gekennzeichnet, dass** die Blende (8) mindestens eines der folgenden Merkmale aufweist:
- sie ist aus Polyamid oder aus Polyester hergestellt;
- sie weist eine Breite (10) zwischen fünf und zehn Zentimetern auf.

8. System zum Einfangen eines Fluggeräts,
**dadurch gekennzeichnet, dass** es eine Einfangvorrichtung (3) wie jene, die in einem der Ansprüche 1 bis 7 spezifiziert ist, und eine mit dieser Einfangvorrichtung (3) ausgestattete Drohne (4) umfasst, wobei die Einfangvorrichtung (3) während eines Schritts des Einfangens (E3) von der Drohne (4) geschleppt wird.

9. System nach Anspruch 8,
**dadurch gekennzeichnet, dass** es einen Beutel (13) umfasst, in dem die Einfangvorrichtung (3) in einer zusammengeklappten Position (P1) eingegliedert ist, und dadurch, dass der Beutel (13) an der äußeren Struktur (4A) der Drohne (4) in einem unteren Teil der Drohne (4) befestigt ist.

10. System nach Anspruch 9,
**dadurch gekennzeichnet, dass** es Öffnungsmittel umfasst, die geeignet sind, gesteuert zu werden, und dazu ausgelegt sind, den Beutel (13) derart öffnen zu können, dass das Austreten der Einfangvorrichtung (3) über das Auseinanderklappen des Schafts (6) ermöglicht wird.

11. System nach Anspruch 10,
**dadurch gekennzeichnet, dass** die Öffnungsmittel ein Betätigungsorgan umfassen, das geeignet ist, gesteuert zu werden, und dazu ausgelegt ist, eine Spindel (16) zu entnehmen, die ermöglicht, mehrere Teile (18) des Beutels (13) zusammenzuhalten, und somit die zusammengehaltenen Teile (18) zu lösen.

12. System nach einem der Ansprüche 8 bis 11,
**dadurch gekennzeichnet, dass** es ein Trennmittel umfasst, das geeignet ist, gesteuert zu werden, und dazu ausgelegt ist, die Einfangvorrichtung (3) von der Drohne (4) trennen zu können.

13. Verfahren zum Einfangen eines Fluggeräts mithilfe eines Einfangsystems, wobei das Einfangsystem (1) eine Einfangvorrichtung (3) und eine mit dieser Einfangvorrichtung (3) ausgestattete Drohne (4) umfasst, wobei die Einfangvorrichtung (3) ein Netz (5) umfasst, mindestens einen Schaft (6), der dazu ausgelegt ist, eine geschlossene Linie zu bilden, wobei der Schaft (6) eine Anströmseite (6A) und eine Abströmseite (6B) definiert, wobei das Netz (5) einen maximalen Durchmesser aufweist, der größer ist als ein maximaler Durchschnitt (D) der geschlossenen Linie, die von dem Schaft (6) gebildet wird, wobei das Netz (5) am Schaft (6) auf der Seite (7) der Abströmseite (6B) befestigt ist, eine Blende (8), die vollständig um den Schaft (6) herum auf der Außenseite des Netzes (5) auf der Seite (7) der Abströmseite (6B) befestigt ist; und Halteseile (9), die am Schaft (6) auf der Seite (10) der Anströmseite (6A) befestigt sind, **dadurch gekennzeichnet, dass** es mindestens die folgenden Schritte umfasst:
- einen Schritt des Ausbreitens (E2), der darin besteht, die Einfangvorrichtung (3) ausgehend von einer zusammengeklappten Position (P1), in der der Schaft (6) sowie das Netz (5), die Blende (8) und die Halteseile (9), zusammengeklappt sind, in eine ausgebreitete Position (P2) auszubreiten, in der der Schaft (6) auseinandergeklappt ist und seine Form einer geschlossene Linie einnimmt, wobei die Einfangvorrichtung (3) an der Drohne (4) befestigt bleibt und von dieser Letzteren geschleppt wird; und
- einen Schritt des Einfangens (E3), der darin besteht, die Drohne (4) auf solche Weise zu fliegen, dass sie die Einfangvorrichtung (3), die sie schleppt, in eine solche Position leitet, dass das einzufangende Fluggerät (2) den Schaft (6) der Einfangvorrichtung (3) über seine Anströmseite (6A) durchquert und im Netz (5) der Einfangvorrichtung (3) zurückgehalten wird.

14. Verfahren nach Anspruch 13,
**dadurch gekennzeichnet, dass** es weiter einen Schritt des Abwerfens (E5) umfasst, der darin besteht, die Einfangvorrichtung (3) von der Drohne (4) zu lösen, um das in der Einfangvorrichtung (3) eingefangene Fluggerät (2) abzuwerfen.

15. Verfahren nach Anspruch 14,
**dadurch gekennzeichnet, dass** es weiter zwischen dem Schritt des Einfangens (E3) und dem Schritt des Abwerfens (E5) einen Schritt des Entfernens (E4) umfasst, der darin besteht, die Drohne (4) auf solche Weise zu fliegen, dass das in der Einfangvorrichtung (3) eingefangene Fluggerät (2) über eine bestimmte geographische Zone geleitet wird, in der der Schritt des Abwerfens (E5) ausgeführt wird.

## Claims

1. A device for capturing a flying craft, said capture device (3) comprising a net (5) and at least one rod (6) configured to form a closed line, the rod (6) defining a leading face (6A) and a trailing face (6B), the net (5) having a maximum diameter which is greater than a maximum diameter (D) of closed line formed by the rod (6), the net (5) being attached to the rod (6) on the side (7) of the trailing face (6B);
**characterised in that** the device further comprises:
- a strip (8) attached all around the rod (6) outside the net (5) on the side (7) of the trailing face (6B); and
- holding wires (9) attached to the rod (6) on the side (10) of the leading face (6A).

2. The device according to claim 1,
**characterised in that** the rod (6) has a circular shape as a closed line.

3. The device according to any of claims 1 and 2,
**characterised in that** it is configured to be able to assume a folded position in which the rod (6) is folded together with the net (5), the strip (8), and the holding wires (9) and a deployed position (P2) in which the rod (6) is unfolded and assumes its closed line shape.

4. The device according to any one of the preceding claims,
**characterised in that** the holding wires (9) meet at a junction point (11) to which a towing wire (12) is attached.

5. The device according to claim 4,
**characterised in that** the holding wires (9) and/or the towing wire (12) are elastic.

6. The device according to any one of the preceding claims,
**characterised in that** the rod (6) has at least one of the following characteristics:
- it is made of carbon fibre;
- it has a diameter of between two and four millimetres;
- the closed line formed by the rod (6) has a diameter (D) of between two and four metres.

7. The device according to any one of the preceding claims,
**characterised in that** the strip (8) has at least one of the following characteristics:
- it is made of polyamide or polyester;
- it has a width (10) of between five and ten centimetres.

8. A system for capturing a flying craft,
**characterised in that** it comprises a capture device (3) such as that specified in any one of claims 1 to 7 and a drone (4) equipped with this capture device (3), the capture device (3) being towed by the drone (4) during a capture step (E3).

9. The system according to claim 8,
**characterised in that** it comprises a bag (13) in which the capture device (3) is integrated in a folded position (P1), and **in that** said bag (13) is attached to the external structure (4A) of the drone (4) in a lower portion of the drone (4).

10. The system according to claim 9,
**characterised in that** it comprises controllable opening means configured to be able to open the bag (13) in such a way as to allow the exit of the capture device (3) via the unfolding of the rod (6).

11. The system according to claim 10,
**characterised in that** the opening means comprises a controllable actuation member configured to remove a spindle (16) allowing for holding together a plurality of portions (18) of the bag (13) and thereby release the portions (18) held together.

12. The system according to any one of claims 8 to 11,
**characterised in that** it comprises a controllable separation means configured to be able to separate the capture device (3) from the drone (4).

13. A method for capturing a flying craft using a capture system, the capture system comprising a capture device (3) and a drone (4) equipped with this capture device (3), the capture device (3) comprising a net (5), at least one rod (6) configured to form a closed line, the rod (6) defining a leading face (6A) and a trailing face (6B), the net (5) having a maximum diameter which is greater than a maximum diameter (D) of closed line formed by the rod (6), the net (5) being attached to the rod (6) on the side (7) of the trailing face (6B), a strip (8) attached all around the rod (6) outside the net (5) on the side (7) of the trailing face (6B), and holding wires (9) attached to the rod (6) on the side (10) of the leading face (6A
**characterised in that** it comprises at least the following steps:
- a deployment step (E2) consisting of deploying the capture device (3) from a folded position (P1) in which the rod (6) is folded together with the net (5), the strip (8), and the holding wires (9), to a deployed position (P2) in which the rod (6) is unfolded and assumes its closed line shape, the capture device (3) remaining attached to and being towed by the drone (4); and
- a capture step (E3) consisting of making the drone (4) fly so as to bring the capture device (3) which it is towing, into a position such that the flying craft (2) to be captured passes through the rod (6) of said capture device (3) by its leading face (6A) and is retained in the net (5) of said capture device (3).

14. The method according to claim 13,
**characterised in that** it further comprises a release step (E5) consisting of releasing the capture device (3) from the drone (4) in order to release the captured flying craft (2) into said capture device (3).

15. The method according to claim 14,
**characterised in that** it also comprises, between the capture step (E3) and the release step (E5), a distancing step (E4) consisting of making the drone (4) fly in such a way as to bring the flying craft (2) captured in the capture device (3), above a given geographical area where the release step (E5) is implemented.
